# EUROPEAN PATENT APPLICATION

(11) **EP 0 896 295 A2**
(43) Date of publication of application: **10.02.1999**
(21) Application number: 98305746.4
(22) Date of filing: 17.07.1998
(51) Int. Cl.: G06K 9/46

(54) **Character recognition method and system**

(30) Priority: 04.08.1997 US 905699
(71) Applicant: XEROX CORPORATION, Rochester, New York 14644 (US)
(72) Inventor: Handley, John C., Fairport, New York 14450 (US); Eschbach, Reiner, Webster, NY 14580 (US)
(74) Representative: Skone James, Robert Edmund

(57) **Abstract**

A method and system for performing optical character recognition wherein data remains in compressed form. Character features are extracted in the spatial domain, and are distinguished from recognition features in the compressed domain wherein said character image is represented in compact form. OCR is conducted within a compressed data stream wherein a document is scanned; said document is compressed; recognition feature extraction is performed on said document; and recognition features extracted from said document are classified.

## Description

This invention is generally related to optical character recognition methods and devices and, more particularly, to a system and method for performing character recognition.

Optical character recognition (OCR) is the process of converting photonic or electronic representations of a character form into a symbolic form. In modern systems, the data are kept in computer memory, whether on a hard disk or in random access memory. The symbolic representation can then be stored and edited.

The process consists of three steps: scanning, feature extraction and classification. The first step takes place by using a light-sensitive device to convert a character printed on a substrate into electronic impulses and represented as an array in a processor memory. The character might also be printed in a magnetic ink and sensed using a suitable device.

Step two consists of extracting features from the character image represented as an array. Choosing a good feature set to distinguish among a set of characters, whether they are printed by machine (as in typewriting or typesetting) or by the human hand, is and has been an active area of research and development as shown in work by S. Mori, C. Y. Suen, and K. Yamamoto, "Historical review of OCR research and development", Proceedings of the IEEE, vol. 80, no. 7, 1992, pp. 1029-1058.

Step three applies a decision rule to the observed extracted feature and assigns it a class, i.e., a character code. In the case of hidden-layer neural network methods for OCR, step two may occur in the first layer and step three in the second layer.

OCR technologies represents one of the great successes of pattern recognition theory and has had enormous economic impact by drastically reducing the manual labor required to convert paper documents to electronic form. Increasing microprocessor speeds and lower costs have allowed OCR technologies to be bundled with a variety of document processing systems including desktop scanners, fax machines and fax modems.

Data compression techniques, in which data are compactly represented, are ubiquitous in computer, broadcast and telecommunications systems. Document images represent vast amounts of data that can be encoded to reduce the size of their representations. So valuable and large are these data forms, that special compression techniques have been developed for them, including the well-known "Group 3" facsimile system.

U.S. Patent No. 4,034,343 entitled "Optical character recognition system", issued to Xerox Corporation on 5 July 1977, describes prior art in OCR in the spatial domain. U.S. Patent No. 3,582,884 entitled "Multiple-scanner character reading system", issued to Cognitronics Corporation on 1 June 1971, describes a OCR system on a communications network in which characters are scanned and represented as signals. Decoding from the signals to the original video scan data is done before recognition. Extracting physical information about a document (as opposed to content) from an encoded document is known in the prior art. U.S. Patent No. 5,245,676 entitled "Determination of image skew angle from data including data in compressed form", issued to Xerox Corporation on 14 September 1993, describes a system to determine document skew from compressed document image data without decompressing.

In copying and scanning applications it is becoming more and more standard to compress the scanned data immediately at the scanner, in order to reduce the storage space and bandwidth requirements. One disadvantage of such systems is that some image processing operations become cumbersome, impossible or require a subsequent decompression step.

In accordance with the present invention, we provide a method of performing character recognition wherein data remains in compressed form during character recognition.

Thus a feature of this invention is to provide a means for performing Character Recognition (OCR) in a compressed domain without the necessity to decompress the data. The two main advantages for such an approach are (1) less memory requirements and (2) less processing.

We also provide a system for performing Character Recognition in a compressed domain without decompressing the data.

The invention distinguishes between character features extracted in the spatial domain, the array of values in computer memory representing the character image, and recognition features in the compressed domain where the character image is represented in a compact form. In the following, the term "feature(s)" will be used to refer to the recognition features in the compressed domain.

Utilizing the invention, feature extraction is performed on the compressed document and features extracted from the compressed document are then classified. In most embodiments, character features are extracted in the spatial domain (array values in computer memory representing a character image) and distinguished from features in the compressed domain wherein said character image is represented in compact form. OCR is conducted within the compressed data stream wherein a document has been scanned; the document is in compressed form; feature extraction is performed on the document; and features extracted from said document are classified. After classification, the document can be further processed without the need for additional OCR conditioning. Further processing may include data storage in compressed form or decompression of the document for further manipulation.

OCR on compressed document image data leverages the confluence of computer, communications, and imaging technologies. Such a process affords the following advantages:

Compressed document images occupy less processor memory. In a system with limited memory, the extra space could be used for more of the document image or more machine instructions to process the data (affording greater accuracy). Compressed document images are faster to transmit. An OCR system processing compressed data could operate faster by accessing fewer bits of data. Use of less memory allows cheaper devices. More flexibility is achieved during document processing with a system architecture that places OCR in a compressed data stream, e.g. in a facsimile receiving device before display or printing operations. Rapid scanning of document databases for keywords and scanning of fax traffic for keywords are further enabled.

The preferred embodiments and other aspects of the invention will become apparent from the following detailed description of the invention when read in conjunction with the accompanying drawings which are provided for the purpose of describing embodiments of the invention and not for limiting same, in which:
Figure 1 illustrates a case where the run-lengths for the letter "o" are given;
Figure 2 illustrates a scanned character "4";
Figure 3 illustrates a test page that was used during experimentation; and
Figure 4 illustrates a block diagram of the invention.

Run Length Encoding is mentioned in this disclosure to refer to a class of compression algorithms, such as the ones used in the CCITT G3/G4 standards, the method incorporated in the Microsoft® BMP file format, etc. An overview of RLE compression schemes can be found in a publication by N.S. Jayant and P. Noll entitled "Digital Coding of Waveforms", Prentice Hall, chapter 10, 1984.

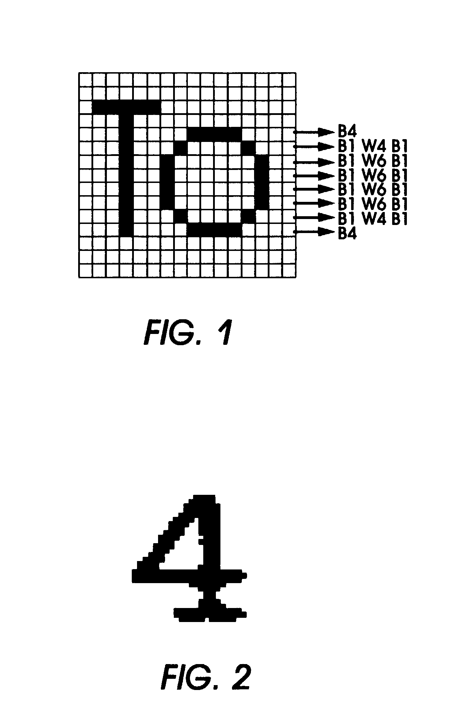

Since human users read and interpret text in the "uncompressed" domain, it seems natural that a character recognition software should derive its feature set from the same basic data. We have realised that to an algorithm, however, it is irrelevant whether the input data can or cannot be interpreted by a human, as long as the data is sufficient to describe and distinguish between the different parameters. A neural net learning algorithm can therefore be devised that uses features generated from the compressed domain. This description will show that character recognition can be performed in a binary compressed domain without the need to decompress the image data. A run-length compression algorithm is assumed for purposes of this description only. In this case, the input data is represented by runs of white and black pixels. Figure 1 shows a case where the run-lengths for the letter "o" are given. Please note, that all run-lengths start with a black run. This means that no "box-determination" and white run calculation has to be performed.

All black runs from Figure 1 are used to calculate a normalized histogram of the black runs (in realistic examples, runs have a much wider range than in the example) and the histogram is quantized to 8 bins. These 8 bins serve as 8 input features for a classifier. Additionally, the histograms of white runs "framed" by the black runs was calculated and quantized into 8 bins. This results in a total of 16 features for a classifier. For example, consider the scanned character "4" in Figure 2.

The white runlength histogram is computed as follows. There are 14 white runlengths contained in between black runs. The width of the character is 22 pixels so the maximum such white runlength is 20. The runlength counts are 1(3), 2(1), 3(1), 4(0), 5(2), 6(1), 7(1), 8(3), 9(1), resulting in the 8-bin histogram:
(0.286,0.143,0.286,0.286,0.000,0.000,0.000,0.000) Similarly, the maximum black runlength is 22 and the counts are 2(2), 3(11), 4(17), 5(4), 7(3), 8(1), 13(1), 14(1), 17(1), 21(1), 22(1), resulting in the 8-bin histogram:
(0.047,0.744,0.093,0.000,0.023,0.023,0.023,0.047)

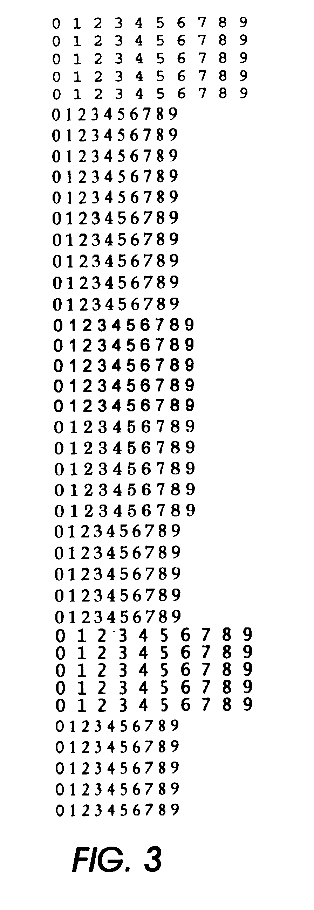

In order to verify the above described invention, a classifier was trained on character data and tested. Two pages containing the ten numerals, each digit represented 5 times in 8 different fonts of various sizes, were printed on a 600 dpi laser printer and scanned at 300 dpi (the description is restricted to numerals for this description only). One page was used for training and the other for testing, i.e. the font-sets were identical for training and testing, but the actual data were different. Figure 3 shows the test page that was used in the experiment, which is a different scan than the training page.

The compressed image features are independent of the particular nonparametric classifier used. Two popular choices are neural networks and decision trees. The latter type of classifier was built because of its speed of execution, but either type of classifier might be used in the implementation. Classification accuracy of tree-based classifiers are nearly equivalent to neural nets, but their execution speed is much faster as explained by B.D. Ripley in "Pattern Recognition and Neural Networks", Cambridge University Press, 1996. A tree-based classifier was built using the 16 run-length histogram features from the training image using the C4.5 system as discussed by J.R. Quinlan in "C4.5: Programs for Machine Learning", Morgan Kaufmann, 1992. Below is the decision tree expressed in a "C"-like computer programming language. Array values A[0] through A[7] contain consecutive values of the 8-bin white histogram and array values A[8] though A[15] contain consecutive values of the 8-bin black histogram: 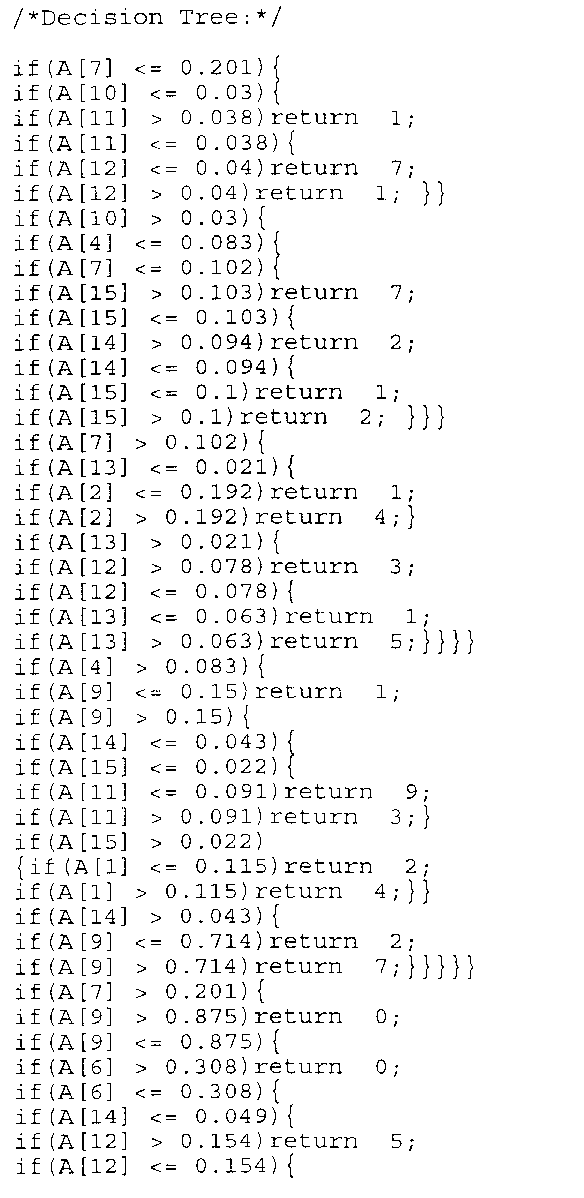 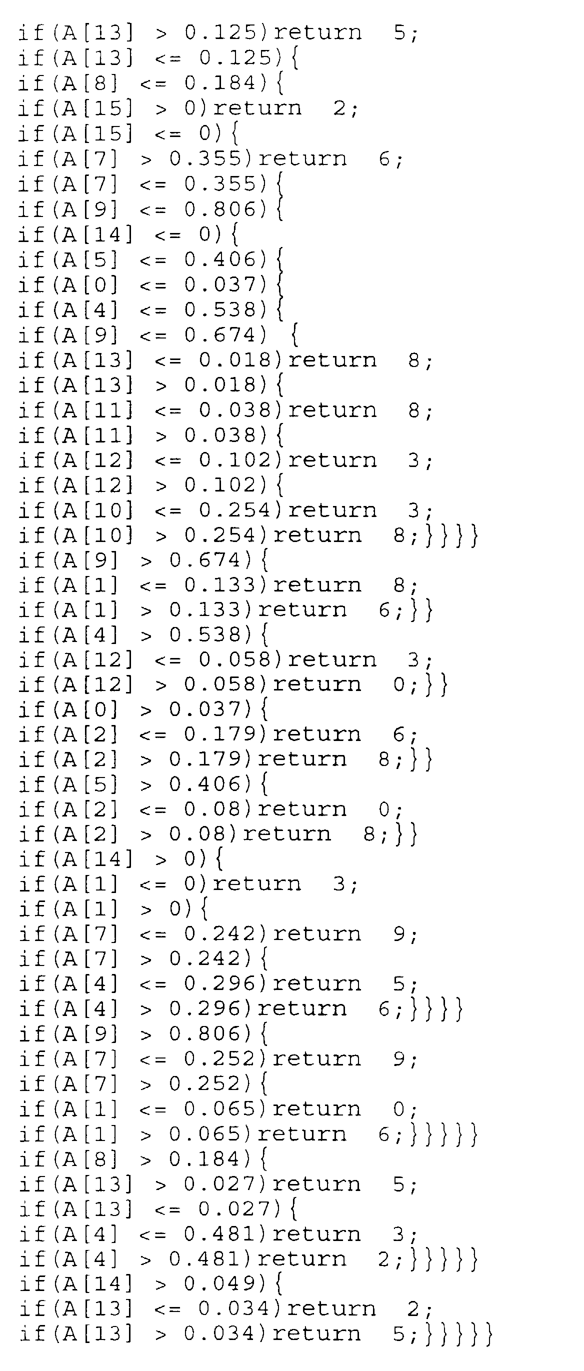 On the test image, there were 33 errors out of 400 digits (367 correctly identified) for an accuracy of 92%. The confusion matrix for the test set is:

| **True\Est** | **'0'** | **'1'** | **'2'** | **'3'** | **'4'** | **'5'** | **'6'** | **'7'** | **'8'** | **'9'** |
|---|---|---|---|---|---|---|---|---|---|---|
| **'0'** | 40 | | | | | | | | | |
| **'1'** | | 38 | 1 | | | | | | | 1 |
| **'2'** | | 1 | 32 | 2 | 3 | | | 2 | | |
| **'3'** | 1 | | 2 | 34 | 1 | 1 | | | 1 | |
| **'4'** | | 1 | | | 39 | | | | | |
| **'5'** | | 1 | 3 | | | 36 | | | | |
| **'6'** | | | | | | | 36 | | 4 | |
| **'7'** | | | | 1 | | | | 39 | | |
| **'8'** | 3 | | | 2 | | | 1 | | 34 | |
| **'9'** | | | | | | | 1 | | | 39 |

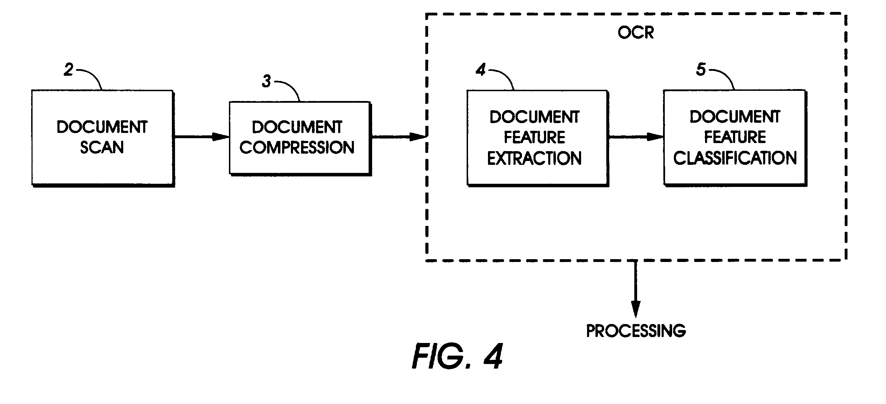

Referring to Figure 4, a block diagram of the system which may be used to implement the inventive method is provided. A microprocessor can be programmed to execute OCR on compressed data. As shown in the figure a document is scanned 2 and data in the document compressed 3. Data is typically decompressed prior to OCR operations as discussed in the Background; however, the invention conducts OCR on the compressed data. Feature extraction 4 and classification 5 can be conducted on the compressed data as discussed above. The recognized data can then undergo further processing which may include storage in compressed form, or decompression of data for further document manipulation such as word processing.

## Claims

1. A method of performing character recognition wherein data remains in compressed form during character recognition.

2. The method of claim 1, wherein character features from said data are extracted in the spatial domain, and are distinguished from recognition features in the compressed domain.

3. The method of claim 2, wherein character recognition is conducted in a compressed data stream.

4. The method of any of the preceding claims, wherein the data is run-length-encoded.

5. The method of any of the preceding claims, wherein:
a document containing characters is scanned;
said document is compressed to generate said data;
recognition feature extraction is performed on said data; and
recognition features extracted from said data are classified.

6. A microprocessor programmed to:
perform recognition feature extraction on a compressed document, wherein data within said compressed document remains in compressed form; and
perform recognition feature classification on said data of said compressed document wherein recognition features for said data, extracted from said compressed document in compressed form, are assigned relevant character codes.
